# EUROPÄISCHE PATENTSCHRIFT

(11) **EP 0 958 949 B1**
(45) Veröffentlichungstag und Bekanntmachung des Hinweises auf die Patenterteilung: **28.01.2004**
(21) Anmeldenummer: 99107187.9
(22) Anmeldetag: 13.04.1999
(51) Int. Cl.: B60C 27/10

(54) **Seitenhalterung einer Gleitschutzkette**
Lateral connector for antiskid chain
Connection latérale pour chaîne anti-patinage

(30) Priorität: 22.05.1998 DE 19823075
(43) Veröffentlichungstag der Anmeldung: 24.11.1999
(60) Teilanmeldung: 02012467.3
(73) Patentinhaber: PEWAG AUSTRIA GmbH, A-8010 Graz (AT)
(72) Erfinder: Franklin, Charles R., 33010 Fusine in Valromana (Tarvisio) (IT)
(74) Vertreter: Geyer, Werner, Dr.-Ing.

(56) Entgegenhaltungen:
- CH-A- 352 918
- DE-U- 8 704 523
- US-A- 1 521 619

## Beschreibung

Die Erfindung bezieht sich auf eine Seitenhalterung einer Gleitschutzkette mit einem Verschluß zum Verbinden der beiden freien Enden eines Bügelstranges, der seitlich an einem Fahrzeugreifen anlegbar ist und zur Befestigung des Laufnetzes der Gleitschutzkette über Befestigungshaken dient, wobei der Verschluß ein Formteil aufweist, das in Längsrichtung mittig mit einem Schlitz versehen ist, der die Dicke des Formteils vollständig durchsetzt und eine Breite hat, durch die der Bügelstrang einlegbar ist, und ferner im Mittelbereich der Länge des Verschlusses mit einer seitlichen Erweiterung versehen ist, die das Hindurchführen eines mit einer Verdickung versehenen Endes des Bügelstranges gestattet.

Solche Seitenhalterungen dienen dazu, ein über die Lauffläche eines Reifens aufgelegtes Laufnetz auf dieser zu halten, wobei das Laufnetz an den aufbeiden Seiten bzw. Flanken des Reifens anliegenden Seitenhalterungen mit speziell ausgebildeten Befestigungshaken angeschlossen ist.

Bei den meisten bekannten Ausführungsformen solcher Gleitschutzketten besteht die auf der Außenflanke des Reifens vorgesehene Seitenhalterung aus einer Kette, die auf der inneren Flanke des Reifens vorgesehene Seitenhalterung dagegen aus einem Bügelstrang, der als einstückiger federelastischer und eine Öffnung aufweisender Ring ausgebildet sein kann, der wiederum aus einem Draht oder einem seilförmigen Strang besteht.

Solche Bügelstränge erleichtern das Aufziehen der Gleitschutzkette auf den Reifen, da sie ja bereits der Form des Reifens nachgestaltet sind.

Der auf der Innenseite des Reifens aufliegende Bügelstrang muß jedoch nach dem Aufziehen der Gleitschutzkette auf den Reifen geschlossen werden, d.h., seine beiden freien Enden müssen aneinander bzw. miteinander verbunden werden.

Dazu wurden bisher unterschiedlichste Verbindungsformen vorgeschlagen, meistens Hakenund Ösenverschlüsse, wie sie beispielsweise aus der DE 16 05 675 C3 und EP 0 274 981 A2 bekannt sind.

Die DE 16 05 675 C3 beschreibt einen Verschluß für die Seitenhalterung einer Gleitschutzkette mit einem in ein Endglied der Seitenhalterung unlösbar eingehängten, als flacher Steg ausgebildeten Haken, der eine von seiner Nase begrenzte Einführöffnung für das lösbar mit ihm zu verbindende andere Endglied der Seitenhalterung aufweist.

Dabei ist der Haken durch ein plattenförmiges, flaches Stanzteil gebildet, das an einem Ende eine schräg in Richtung auf das andere Hakenende verlaufende Nase aufweist, die eine Einhängeöffnung für das andere mit ihm zu verbindende Endglied der Seitenhalterung aufweist, wobei die Öse aus einem Stanzteil hergestellt ist, dessen flache Schenkel in der Schließstellung parallel zu den Seitenflächen des Hakens liegen, dessen Nase den eine geringere Höhe als die Schenkel aufweisenden Steg der Öse umgreift, wobei die lichte Weite der Öse zwischen den Schenkeln nur wenig größer als die Dicke des Hakens ist.

Dieser bekannte Verschluß weist eine verhältnismäßig große Bauhöhe auf, d.h., er überragt die Flanke des mit der Gleitschutzkette versehenen Reifens mehr als die auf der Flanke aufliegende Seitenhalterung.

Ein ähnlicher Verschluß ist in der EP 0 274 981 A2 beschrieben, bei dem die Seitenhalterung als einstückiger federelastischer Ring und das eine Ende der Seitenhalterung als flacher, parallel zur Flanke des Reifens liegender Haken ausgebildet ist, der in eine am anderen Ende der Seitenhalterung vorgesehene und um 90° zur Hakenebene angeordnete Öse einsteht. Auch hier ist die Bauhöhe der Öse über der Reifenflanke deutlich größer als die Bauhöhe der Seitenhalterung bzw. des federelastischen Ringes, der den Bügelstrang bildet.

Schließlich ist auch eine Gleitschutzkette bekannt, bei der der Bügelstrang als Stahlseil ausgebildet ist und dessen freie Enden jeweils mit einer Verdickung versehen sind. Der Verschluß zum Verbinden der beiden Enden ist als ein hülsenförmiger Rohrabschnitt ausgebildet, dessen Innendurchmesser dem Außendurchmesser der Verdickungen entspricht. In seinem Mittelbereich weist dieser Rohrabschnitt eine Öffnung in seiner Wandung auf, die eine solche Größe aufweist, daß die Verdickung eines Endes des Bügelstranges durch diese Öffnung in das Innere des Rohrabschnittes eingeführt werden kann, wobei die Wandung des Rohrabschnittes von dieser Öffnung zum einen seiner beiden Enden einen Schlitz aufweist, der annähernd dem Durchmesser des Bügelstranges entspricht, so daß dieser auch zusammen mit der Verdickung in das Innere des Rohrabschnittes von der Seite aus verbracht werden kann. Die offenen Enden des Rohrabschnittes sind so weit nach innen verformt, daß zwar die beiden Enden des Bügelstranges noch durch diese hindurchgeführt werden können, die Verdickungen jedoch im Inneren des Rohrabschnittes festgehalten werden, wobei das dem mit dem Schlitz versehene Ende des Rohrabschnittes gegenüberliegende Ende keinen Schlitz aufweist, vielmehr das andere dicke Ende fest und unlösbar umschließt.

Dieser bekannte Verschluß weist aber gegenüber dem Bügelstrang und damit der Seitenhalterung einen so großen Durchmesser auf, daß er beim Aufliegen auf der Flanke des Reifens deutlich mehr Höhe beansprucht als die Seitenhalterung selbst. Dies liegt daran, daß sich zum Durchmesser der Verdickungen der Enden der Seitenhalterung zweimal die Dicke der Wandungen der Rohrabschnitte addiert.

Schließlich sind aus dem DE-GM 89 02 454 Schließglieder bekannt, die den Verschluß einer als Federstahlbügel ausgebildeten Seitenhalterung an den jeweiligen Enden des Bügelstranges bilden, die einander spiegelbildlich baugleich und an den jeweils gegenüberliegenden beiden Endes des Federstahlbügels befestigt sind. Jedes der Schließglieder ist beispielsweise aus einem Stahlblech ausgestanzt und weist an seinem dem jeweiligen Ende des Federstahlbügels zugewandten Ende zwei Nietlöcher auf, an denen ein das Ende des Federstahlbügels im Klemmsitz umgreifendes Gegenstück angenietet ist Jedes Schließglied ist ferner etwa in seiner Mitte mit einer ungefähr rechteckigen Aussparung versehen und weist nahe seinem freien Ende einen Schließhaken auf, der dadurch gebildet wird, daß eine Blechzunge geeignet aus dem Stahlblech der Grundplatte des betreffenden Schließgliedes herausgebogen wurde. Diese Stahlzunge ist dabei entgegen der Schließrichtung gerichtet, also in Richtung auf den zugehörigen Federstahlbügel hin, so daß sie einen entgegen der Schließrichtung wirksamen Schließhaken ausbildet. Die den Schließhaken ausbildende Blechlasche bzw. Zunge erstreckt sich nahe dem freien Ende des betreffenden Schließgliedes von dessen Fläche aus schräg nach außen, d.h. nach der Seite des Schließgliedes, die nicht zur Anlage an der Seitenwange des Reifens vorgesehen ist, und zur Aussparung hin. Die Zunge ist parallel zur Fläche des Schließgliedes abgewinkelt und läuft parallel zur Aufspannebene des Schließgliedes in Richtung auf die Aussparung hin, wobei sie sich zu ihrem freien Ende hin verjüngt. Der Abschnitt zwischen dem Endabschnitt der Lasche und der Fläche des Schließgliedes ist nicht wesentlich größer als dessen Blechdicke. Ferner ist die Breite des von der Fläche abstehenden Abschnitts der Zunge nur wenig geringer als die Breite der Aussparung. Die Schließhaken beider Schließglieder springen zur gleichen Seite hin vor und liegen zusammen mit den beiden Aussparungen fluchtend auf einer Linie der Schließrichtung. Die Schließglieder liegen ihrerseits in der vom Federstahlbügel aufgespannten Ebene und können sich aneinander verhaken, unabhängig davon, welches der beiden Schließglieder vome und welches hinten liegt. Dadurch, daß diese Schließglieder aneinander zu liegen kommen und jeweils vorstehende Schließhaken aufweisen, die von der Oberfläche der Schließglieder abstehen, und zwar so weit; daß sie die Dicke des gegenüberliegenden Schließgliedes aufnehmen können, ergibt sich eine große Bauhöhe des Verschlusses über der Flanke des mit der Gleitschutzkette versehenen Reifens.

Neben dem vorbeschriebenen bekannten Verschluß weisen aber auch die aus einfachen Runddrähten hergestellten und an der Seitenhalterung vorgesehenen Befestigungshaken für das Laufnetz eine solche Bauhöhe auf, daß sie verhältnismäßig weit über die Flanke des Reifens in den freien Raum hineinragen.

Aus der US-A-1 521 619 ist ein Verschluß zum Verbinden zweier Teile bekannt, die vergrößerte Endabschnitte aufweisen, etwa zum Verbinden der zwei freien Enden einer Kugelkette. Der Verschluß besteht dabei aus einem Formteil mit einem mittleren, im wesentlichen plattenförmigen Abschnitt, dessen beide sich gegenüberliegenden Enden jeweils zur Plattenunterseite umgebogen sind und jeweils einen offenen, angenähert zylindrischen Innenraum bilden. Das Formteil ist dabei in Längsrichtung mittig mit einem Schlitz versehen, der die Dicke des Formteils vollständig durchsetzt, und eine Breite aufweist, durch die der Ehdbereich eines aufzunehmenden Teiles (nicht aber dessen Verdickung) durchführbar ist, wobei im Mittelbereich der Länge des Verschlusses der Schlitz eine seitliche Erweiterung derart aufweist, daß durch sie auch die Verdickung hindurchgeführt werden kann. Der Schlitz des Formteils ragt in die umgebogenen Enden desselben etwa bis zur Hälfte des Durchmessers ihrer zylindrischen Innenräume hinein, so daß das Einführen der Verdickung durch die Erweiterung des Schlitzes in den Mittelbereich des Formteils und das anschließende Verbringen der Verdickung in den zylindrischen Innenraum einer der beiden Umbiegungen dazu führt, daß sie dort in diesem Innenraum gehaltert wird, während durch den bis dorthin ragenden Schlitz der dünnere Teil des Endbereiches des eingehakten Teiles (etwa der Haltefaden der eingehakten Kugelkette) nach außen weggeführt werden kann. Damit ist dieses Ende des eingehakten Teiles an dem Verschluß befestigt. Gleichermaßen kann dies am anderen Ende des Formteils ebenso vorgenommen werden. Dieser bekannte Verschluß ist zwar vergleichsweise einfach aufgebaut, hat aber immer noch eine relativ große Bauhöhe, da die zylindrischen Innenräume der seitlichen Umbiegungen des Formteils so groß ausgebildet sein müssen, daß das Formteil vollständig in ihnen aufgenommen werden kann. Zudem müssen die seitlichen Umbiegungen an ihren freien Endkanten auch noch einen relativ großen Abstand zum plattenförmigen Mittelabschnitt des Formteils aufweisen, damit von dieser Seite her die Verdickung des einzuhängenden Teiles in dem Innenraum der Umbiegung eingeführt werden kann, was ebenfalls die seitliche Bauhöhe vergrößert. Eine Anwendung dieses Verschlusses zur Verbindung der freien Enden von Seitenhalterungen von Gleitschutzketten ist in der Druckschrift nicht angegeben.

Eine Gleitschutzkette mit Merkmalen des Oberbegriffs des Anspruchs 1 ist aus Dokument DE 87 04 523 U bekannt. Dabei ist am einen der freien Enden des Bügelstrangs eine Verdickung und am anderen Ende des Bügelstrangs eine zylindrische, in Fortsetzung des Bügelstrangs verlaufende Hülse angeordnet, die über ihre gesamte Länge hinweg mittig mit einem Schlitz versehen ist, der die Dicke des Formteils vollständig durchsetzt und eine Breite aufweist, durch die der Bügelstrang einlegbar ist. Im Mittelbereich der Länge dieser zylindrischen Hülse ist der Schlitz mit einer seitlichen Erweiterung versehen, durch die die Verdickung am anderen Ende des Bügelstrangs in das Innere der zylindrischen Hülse hindurchgesteckt werden kann. Der Schlitz durchsetzt auch die dem anderen Bügelstrangende zugewandte Endfläche der Hülse fast über deren völlig radiale Erstreckung hinweg. Zur Verbindung wird, wie erwähnt, die Verdickung am einen Ende des Bügelstrangs durch die Erweiterung des Schlitzes in der Mitte der Hülse in deren Inneres eingeführt und dann entlang dem Schlitz, durch den der sich an die Verdickung anschließende (nicht verdickte) Teil des Bügelstrangs hindurchragen kann, so bis zu dem Ende der Hülse gezogen, daß dann die Verdickung innerhalb der Hülse liegt und gegen ein Herausziehen des Bügelstranges aus dieser blockiert. Die Herstellung der zylindrischen Hülse mit an ihren axialen. Enden vorhandenen radialen Endflächen ist ebenso wie ihre Montage am einen Ende des Bügelstranges relativ aufwendig und insgesamt baut auch diese Anordnung noch etwas breit.

Wie vorstehend dargelegt, ist allen bekannten Seitenhalterungen gemeinsam, daß sie mit ihren Verschlüssen und Befestigungshaken verhältnismäßig weit bzw. hoch über die Flanke eines Reifens vorstehen, also eine größere Höhe beanspruchen als dies bei der auch auf den Flanken des Reifens aufliegenden Seitenhalterung bzw. des Bügelstranges der Fall ist. Dieser durch die großen Bauhöhen der Verschlußteile herrührende Überstand über die Reifenflanken ist nun gerade bei den Personenkraftwagen moderner Bauart nachteilig, da die Hersteller solcher PKW einen immer geringer werdenden Freiraum zwischen den Reifen einerseits und dem Innenrahmen bzw. den Radkästen des Fahrzeugs andererseits vorsehen. Insbesondere steht immer weniger Platz zwischen der Innenseite eines Reifens und dem Fahrzeug selbst zur Verfügung, so daß gerade die auf der Innenseite des Reifens angeordnete Seitenhalterung der Gleitschutzkette bezüglich ihres Platzbedarfes besonders raumsparend konstruiert werden muß.

Ausgehend hiervon liegt der Erfindung die Aufgabe zugrunde, eine Seitenhalterung einer Gleitschutzkette der eingangs genannten Art so auszubilden, daß diese Anordnung mit einem besonders geringen seitlichen Überstand über die Flanke des mit der Gleitschutzkette versehenen Reifens ausgeführt werden kann.

Diese Aufgabe wird bei einer Seitenhalterung gemäß Oberbegriff des Anspruchs 1 dadurch gelöst, daß an jedem der beiden freien Enden des Bügelstranges eine Verdickung angebracht ist und das Formteil einen mittleren, im wesentlichen plattenförmigen Abschnitt aufweist, dessen beide sich gegenüberliegende Enden jeweils zur Plattenunterseite umgebogen sind und jeweils einen offenen, angenähert zylindrischen Innenraum bilden, wobei unmittelbar jeder dieser Umbiegungen benachbart an beiden Längsseiten des Formteils ebenfalls nach unten umgebogene Laschen vorgesehen sind, zwei einander gegenüberliegende Laschen jeweils im Querschnitt annähernd dachförmig zueinander geneigt sind, und der Schlitz im Formteil in die umgebogenen Enden des Formteils maximal um die Größe des Durchmessers ihrer zylindrischen Innenräume eintritt, und wobei ferner bei einem eingelegten Bügelstrangende dessen Verdickung in den von zwei dachförmig zueinander verlaufenden Laschen und dem plattenförmigen Abschnitt gebildeten Raum einführbar und dort gegen die benachbarte Umbiegung am zugeordneten Ende des Formteiles als Widerlager abstützbar ist.

Die Erfindung gewährleistet die Lösung der der Erfindung gestellten Aufgabe, nämlich eine Seitenhalterung einer Gleitschutzkette zu bilden, die nicht mehr Platz bzw. keinen größeren Abstand von der Flanke des Reifens benötigt als der Bügelstrang mit seinen verdickten Enden selbst. Des weiteren zeichnet sich das bei der Erfindung eingesetzte Verschlußteil insbesondere auch dadurch aus, daß es in einem einzigen Stanzvorgang aus einem geeigneten Blech herausgestanzt und mit einfachen Mitteln verformt werden kann, ohne daß zusätzliche Halte- und sonstige Befestigungsmittel zwischen dem Bügelstrang und dem Verschluß vorzusehen sind. Vor allen Dingen legt sich der als flaches Formteil ausgebildete Verschluß mit seiner glatten Oberseite unmittelbar an die Flanke des Reifens an und es wird nicht unnötig Platz verschwendet. Die zur Unterseite des Formteiles umgebogenen Enden des mittleren, im wesentlichen plattenförmigen Abschnittes bilden nicht nur eine vorteilhafte Aufnahme des Bügelstranges, sondern auch das Widerlager der Verdickungen der Enden des Bügelstranges, wobei die ebenfalls zur Unterseite hin gebogenen seitlichen Laschen des Formteiles die Verdickungen der Enden des Bügelstranges von der Unterseite des Formteiles her in den in Längsrichtung mittig durch das Formteil laufenden Schlitz hineindrücken.

Dieser erfindungsgemäße Verschluß für die freien Enden des Bügelstranges gewährleistet in einfachster Weise, daß die Enden des Bügelstranges mit ihren Verdickungen nacheinander in den mittig in Längsrichtung des Formteiles verlaufenden Schlitz eingelegt werden können, wobei die Verdickungen der Enden des Bügelstranges selbstverständlich durch die im Mittelbereich der Länge des Verschlusses vorgesehene Erweiterung hindurchgeführt werden müssen. Ein weiterer Vorteil dieser Verschluß-Ausbildung findet sich auch darin, daß das zum Öffnen und Verschließen des Bügelstranges vorgesehene freie bzw. lösbare Ende mit seiner Verdickung dann nicht durch eine von außen ungewollt erfolgende Verschiebung aus der Erweiterung und damit aus dem Schlitz heraustreten kann, da ja der Verschluß mit seiner glatten Oberseite gegen die Flanke des Reifens anliegt und dadurch den Schlitz und seine Erweiterung abschließt.

In vorteilhafter Weiterbildung der Seitenhalterung sind die Verdickungen der Enden des Bügelstranges im Querschnitt rund, sechs- oder achteckig ausgebildet.
Gegenüber der einfacheren, runden Ausbildung der Verdickungen der Enden gewährleisten die mehreckigen Ausbildungen, daß sich die Enden des Bügelstranges nicht innerhalb des Verschlußteiles verdrehen können, da sie gegen die Laschen einerseits und den Schlitz anliegen. Darüber hinaus kann die Ausrichtung des Verschlusses zum Bügelstrang und damit die Lage des Verschlusses zur Reifenflanke festgelegt werden, d.h., die Verschlußlage zum Reifen kann sich nicht unbeabsichtigt ändern.

Erfindungsgemäß entspricht die Gesamtbauhöhe des Verschlusses annähernd dem Durchmesser der Verdickungen der Enden des Bügelstranges.
Durch diese Maßnahme wird insbesondere das der Erfindung gesetzte Ziel erreicht, einen möglichst geringen Abstand des Verschlusses von der Flanke des Reifens zu verwirklichen, wodurch ein geringerer Platzbedarf zwischen der Reifenoberfläche und den Fahrzeugbauteilen erforderlich ist.

Schließlich sind die nach unten am weitesten vorstehenden Kanten der Enden der nach unten gebogenen Laschen parallel zur Fläche der Unterseite des Formstückes ausgebildet und fluchten mit den Unterseiten der beiden zur Plattenunterseite hin umgebogenen Enden des Formteils. Auch diese Maßnahme gewährieistet, daß die Laschen den angestrebten geringen Überstand des Verschlusses über der Reifenflanke nicht überschreiten.

In weiterer vorteilhafter Ausbildung der Erfindung liegen die beiden sich gegenüberliegenden Laschen des einen Endes des Formteils gegen eines der verdickten Enden des Bügelstranges mit Druck an dem verdickten Ende an und halten dieses unlösbar in dem Verschluß fest.
Durch dieses Maßnahme wird gewährleistet, daß der Verschluß sich nicht von einem der beiden Enden des Bügelstranges ungewollt löst und insbesondere beim Aufziehen und Montieren der Kette verlorengehen kann. Das andere verdickte Ende des Bügelstranges dagegen soll nicht unlösbar in dem Verschluß befestigt sein, es dient ja zum Verschließen und Lösen des Endes des Bügelstranges mit dem Verschluß und es verbleibt solange in der verschlossenen Stellung, wie die Gleitschutzkette auf dem Reifen aufgezogen und festgespannt ist.

Vorteilhaft sind die Ränder des Schlitzes sich nach unten in ihrem Abstand voneinander vergrößernd geneigt ausgebildet und der an ihnen zur Anlage kommenden Außenfläche der Verdickungen der Enden des Bügelstranges angepaßt. Durch diese sich von der Unterseite zur Oberseite des Formstückes verengende Ausbildung des Schlitzes können die Verdickungen verhältnismäßig weit in den Schlitz einstehen, insbesondere dann, wenn die Ränderneigungen der jeweiligen Ausbildungsform der Verdickungen, sei sie rund, sechs- oder achteckig, angepaßt sind. Entsprechendes wird im übrigen dadurch bewirkt, daß die nach unten umgebogenen und sich gegenüberliegenden Laschen ebenfalls mit ihren zueinander dachförmig geneigten Flächen entsprechend an den Verdickungen der Enden des Bügelstranges anliegen.

Nachdem die Seitenhalterung jedoch nicht nur den zum Verschließen der beiden freien Enden des Bügelstranges vorgeschlagenen Verschluß aufweist, sondern auch Befestigungshaken für das Laufnetz, erstreckt sich die eingangs beschriebene Aufgabe auch auf die spezielle Ausbildung dieser Befestigungshaken.

Erfindungsgemäß sind nun diese Befestigungshaken für das Laufnetz aus einem Draht hergestellt der eine im Querschnitt ovale Ausbildung aufweist, und bildet der Draht die Befestigungshaken so aus, daß er mit seinen ovalen Seiten einerseits am Bügelstrang und andererseits an der Flanke des Reifens anliegt.
Aufgrund dieser erfindungsgemäßen Ausbildung beansprucht ein solcher Befestigungshaken einen kleineren Abstand über der Flanke des Reifens als die bisher bekannten und aus Drähten mit kreisförmigem Querschnitt hergestellten Befestigungshaken.

Alle diese vorstehend beschriebenen Merkmale der erfindungsgemäßen Seitenhalterung einer Gleitschutzkette gewährleisten gegenüber den Seitenhalterungen nach dem Stand der Technik, daß die damit versehenen Gleitschutzketten wesentlich weniger über die Flanken der mit solchen Gleitschutzketten versehenen Reifen überstehen und solche Gleitschutzketten können deshalb ohne Probleme auch bei Fahrzeugen der neuesten Bauart verwendet werden.

Die erfindungsgemäß vorgeschlagene Seitenhalterung einer Gleitschutzkette wird anhand der Zeichnungen nachfolgend beispielhaft beschrieben.

Es zeigen:
- Fig. 1: die Vorderseite eines mit einer Gleitschutzkette bespannten Reifens und insbesondere die als Kette ausgebildete Seitenhalterung mit Spann- und Verschlußteilen,
- Fig. 2: die Innenseite des mit der Gleitschutzkette bespannten Reifens und insbesondere die als formstabiler Bügelstrang ausgebildete Seitenhalterung mit Verschluß und Befestigungshaken,
- Fig. 3: die vergrößerte Darstellung des die beiden freien Enden des Bügelstranges aufnehmenden und haltenden Verschlusses,
- Fig. 4A: die Seitenansicht auf einen an dem Bügelstrang angebrachten Befestigungshaken,
- Fig. 4B: die Ansicht auf einen an dem Bügelstrang angebrachten Befestigungshaken,
- Fig. 4C: einen Querschnitt des den Befestigungshaken bildenden Drahtes,
- Fig. 5A: eine Vorderansicht auf den Verschluß,
- Fig. 58: eine Draufsicht auf die Oberseite des Verschlusses,

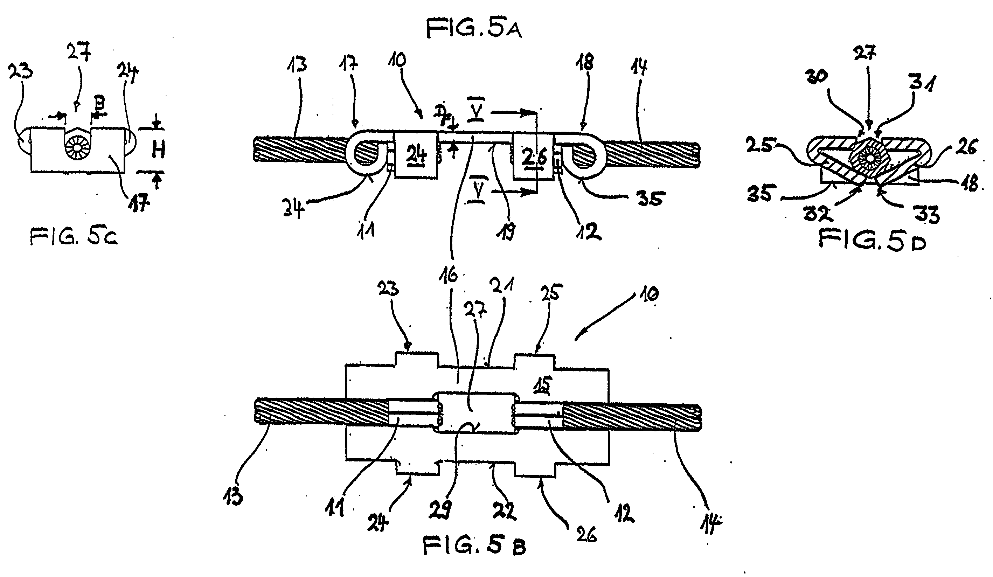

- Fig. 5C: eine Seitenansicht auf den Verschluß,
- Fig. 5D: einen Schnitt gemäß Linie V-V in Fig. 5A,

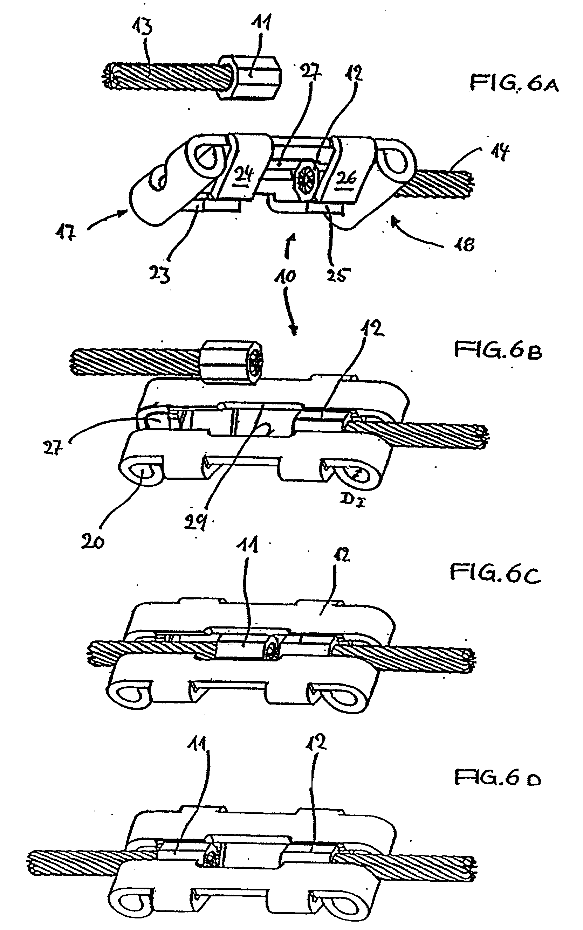

- Fig. 6A: eine perspektivische Darstellung des Verschlusses auf seine Unterseite mit noch nicht eingelegtem freien Ende des Bügelstrages,
- Fig. 6B: eine perspektivische Ansicht auf die Oberseite des Verschlusses mit noch nicht eingelegtem freien Ende des Bügelstranges.
- Fig. 6C: eine perspektivische Ansicht auf die Oberseite des Verschlusses mit eingelegtem, aber noch nicht arretierten freien Ende des Bügelstranges und
- Fig. 6D: eine perspektivische Ansicht auf die Oberseite des Verschlusses mit eingelegtem und arretiertem freien Ende des Bügelstranges.

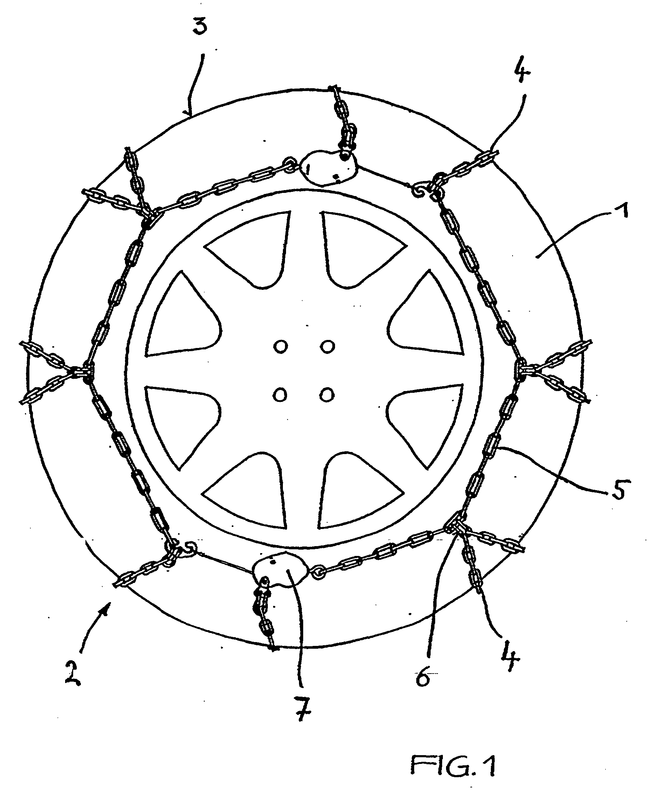

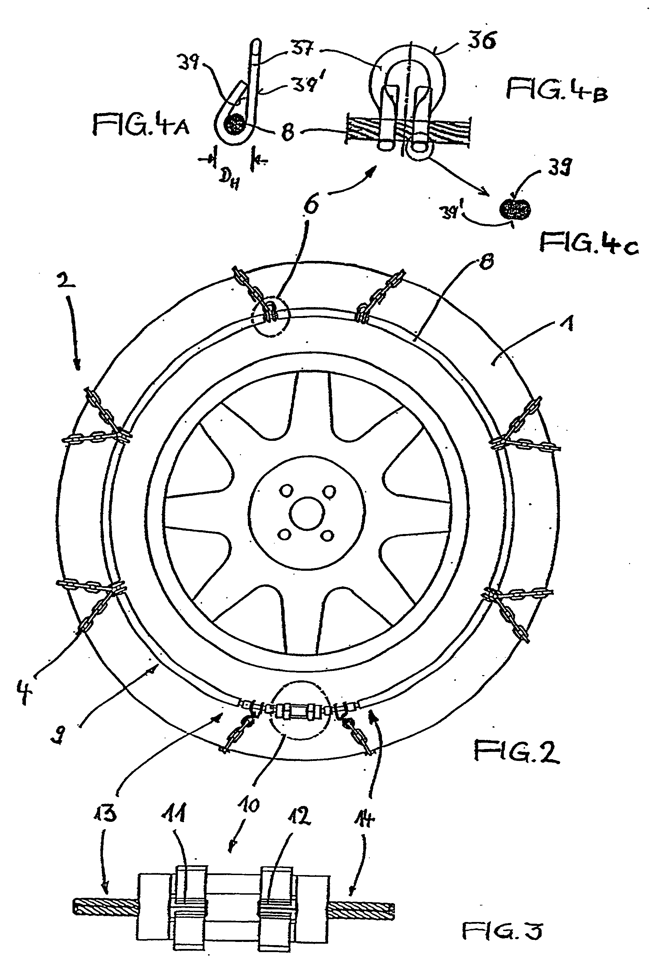

Die in den Figuren 1 und 2 gezeigte und auf einem Reifen 1 aufgezogene Gleitschutzkette 2 besteht im wesentlichen aus einem auf der Reifenlauffläche 3 aufliegenden Laufnetz 4, einer auf der in Fig. 1 gezeigten äußeren Flanke des Reifens 1 aufliegenden und als Kette ausgebildeten ersten Seitenhalterung 5, an der das Laufnetz 4 mit Befestigungshaken 6 befestigt ist und wobei die Seitenhalterung 5 Verschluß- und Spannteile 7 aufweist, eine zweite, als formstabiler Bügelstrang 8 ausgebildete Seitenhalterung 9, die auf der in Fig. 2 gezeigten inneren Flanke des Reifens 1 aufliegt, an welcher das Laufnetz 4 mittels Befestigungshaken 6 befestigt ist, und wobei der Bügelstrang 8 einen Verschluß 10 aufweist, der, in Fig. 3 vergrößert dargestellt, die beiden freien, jeweils mit einer Verdickung 11 bzw. 12 versehenen ersten und zweiten Enden 13 bzw. 14 des Bügelstranges 8 aufnimmt und hält.

Der Verschluß 10 besteht aus einem aus einem flachen Blech bestimmter und erforderlicher Dicke gestanzten Formteil 15, das einen mittleren, im wesentlichen plattenförmigen Abschnitt 16 aufweist, dessen beide sich gegenüberliegende Enden 17 bzw. 18 jeweils zur Plattenunterseite 19 hin, unter Ausbildung eines offenen, angenähert zylindrischen Innenraumes 20 umgebogen sind. Unmittelbar benachbart zu diesen Umbiegungen sind von beiden Längsseiten 21 bzw. 22 des Formteiles 15 ebenfalls nach unten umgebogene Laschen 23, 25 bzw. 24, 26 vorgesehen, wobei zwei einander gegenüberliegende Laschen 23, 24 bzw. 25, 26 jeweils im Querschnitt annähernd dachförmig zueinander geneigt sind, wie in Fig. 5D gezeigt.

Das Formteil 15 weist in Längsrichtung mittig einen Schlitz 27 auf, der die Dicke D_{F} des mittleren plattenförmigen Abschnitts 16 des Formteils 15 vollständig durchsetzt und weiter in die umgebogenen Enden 17 bzw. 18 des Formteils 15 maximal um die Größe des Durchmessers D_{I} ihrer zylindrischen Innenräume 20 eintritt, wobei der Schlitz 27 eine Breite B aufweist, durch die der Bügelstrang 8 einlegbar ist, und der Schlitz 27 im Mittelbereich der Länge des Verschlusses 10 mit einer seitlichen Erweiterung 29 versehen ist, die das Hindurchführen der mit den Verdickungen 11 und 12 versehenen Enden 13 und 14 des Bügelstranges 8 gestattet.

Diese Verdickungen 11 bzw. 12 der Enden 13 und 14 des Bügelstranges 8 können dabei rund oder mehreckig ausgebildet sein, in dem Ausführungsbeispiel, insbesondere gemäß Fig. 5D, ist eine achteckige Ausbildung dargestellt. Diese gewährleistet, daß sich diese Verdickungen 11 und 12 nicht in dem Verschluß 10 verdrehen können, nämlich deshalb nicht, da einige dieser Flächen bzw. der Ecken der Verdickungen 11 bzw. 12 an den Rändern 30 bzw. 31 des Schlitzes 27 bzw. an den nach unten abgebogenen und sich dachförmig gegeneinander neigenden Laschen 23 und 24 bzw. 25 und 26 zur Anlage kommen.

Die Ränder 30 bzw. 31 des Schlitzes 27 sind dabei in vorteilhafter Ausbildung geneigt ausgebildet, und zwar in der Form, daß sich der Schlitz 27 in seiner Breite zu seiner Unterseite 19 hin erweitert.

Die nach unten vorstehenden Kanten 32 und 33 der Laschen 23 und 24 bzw. 25 und 26 sind abgeflacht ausgebildet, und zwar parallel zur Unterseite 19 des Formteils 15 und fluchten mit den Unterseiten 34 bzw. 35 der beiden zur Plattenunterseite umgebogenen Enden 17 bzw. 18 des Formteils 15.

Diese besondere Formgebung des Verschlusses 10 gewährleistet, daß dessen Gesamtbauhöhe H nur wenig den Durchmesser der Verdickungen 11 bzw. 12 der Enden 13 bzw. 14 des Bügelstranges 8 überschreitet und damit gewährleistet, daß der von dem Verschluß und der Seitenhalterung gebildete seitliche Überstand über die Reifenflanke gering gehalten werden kann.

In Fig. 4A bis 4C sind die das Laufnetz 2 an den Seitenhalterungen 5 und 9 haltenden Befestigungshaken 6 gezeigt, die als Doppelhaken 36 ausgebildet und aus einem Draht 37 geformt sind, der einen ovalen Querschnitt aufweist mit zwei im wesentlichen zueinander parallelen Seiten 39 und 39', wie insbesondere in Fig. 4C dargestellt.

Der Doppelhaken 36 ist nun in der Weise aus dem ovalen Draht 37 gebildet, daß dessen eine ovale Seite 39 an der Außenfläche des Bügelstranges 8 zu liegen kommt und dessen andere ovale Seite 39' an der Flanke des Reifens 1, wodurch sich, wie insbesondere in Fig. 4A gezeigt, die Auflagehöhe D_{H} gegenüber einer Ausbildung aus einem Runddraht deutlich vermindert, und zwar unter Beibehaltung des gewünschten Querschnittes.

Die Figuren 6A bis 6D zeigen den Verschließvorgang der mit den Verdickungen 11 bzw. 12 versehenen Enden 13 bzw. 14 des Bügelstranges 8.

Das erste Ende 14 mit der Verdickung 12 des Bügelstranges 8 ist dabei in dem Verschluß 10 unlösbar befestigt, so daß es bei nicht aufgespannter Gleitschutzkette und insbesondere während des Aufziehens und Montierens nicht aus dem Verschluß 10 herausfallen kann. Dazu sind die Laschen 25 und 26 fest gegen die mehrflächig ausgebildete Verdickung 12 des Endes 14 gedrückt und klemmen dieses zwischen die Ränder 30 und 31 des Schlitzes 27 ein.

In Fig. 6A ist nun dargestellt, wie das lösbare zweite Ende 13 mit der Verdickung 11 über den Verschluß 10 und in den Bereich des Schlitzes 27 und insbesondere die Verdickung 11 in den Bereich mit den Erweiterungen 29 verbracht und auf den Verschluß 10 zugeführt und, wie in Fig. 6C gezeigt, dann dort eingelegt wird. Im Gegensatz zu Fig. 6A zeigen Fig. 6B und 6C diesen Vorgang in perspektivischer Ansicht auf die Oberseite des Verschlusses.

Das Ende 13 des Bügelstranges 8 wird nun, wie in Fig. 6D in der Endstellung dargestellt, in den von den Laschen 23 und 24 gebildeten Raum hineingezogen und dann dort in dem zusammen mit den Rändern 30 und 31 des Schlitzes 27 gebildeten Bereich unverdrehbar gehalten.

Danach kann dann die Gleitschutzkette 2 auf der Vorderseite des Reifens 1 mit den in Fig. 1 gezeigten Verschließ- und Spannvorrichtungen 7 fest auf dem Reifen 1 arretiert werden.

## Patentansprüche

1. Seitenhalterung (9) einer Gleitschutzkette (2) mit einem Verschluß (10) zum Verbinden der freien Enden (13; 14) eines Bügelstranges (8), der seitlich an einem Fahrzeugreifen (1) anlegbar ist und zur Befestigung des Laufnetzes (4) der Gleitschutzkette (2) über Befestigungshaken (6) dient, wobei der Verschluß ein Formteil (15) aufweist; das in Längsrichtung mittig mit einem Schlitz (27) versehen ist, der die Dicke (D_{F}) des Formteils (15) vollständig durchsetzt und eine Breite (B) aufweist, durch die der Bügelstrang (8) einlegbar ist, und ferner im Mittelbereich der Länge des Verschlusses (10) mit einer seitlichen Erweiterung (19) versehen ist, die das Hindurchführen eines mit einer Verdickung (11; 12) versehenen Endes (13; 14) des Bügelstranges (8) gestattet,
***dadurch gekennzeichnet*,**
**daß** an jedem der beiden freien Enden (13; 14) des Bügelstranges (8) eine Verdickung (11, 12) angebracht ist und das Formteil. (15) einen mittleren, im wesentlichen plattenförmigen Abschnitt (16) aufweist, dessen beide sich gegenüberliegende Enden jeweils zur Plattenunterseite (19) umgebogen sind und jeweils einen offenen, angenähert zylindrischen Innenraum (20) ausbilden, wobei unmittelbar jeder dieser Umbiegungen benachbart an beiden Längsseiten (21; 22) des Formteils (15) ebenfalls nach unten umgebogene Laschen (23, 25; 24, 26) vorgesehen sind, jeweils zwei einander gegenüberliegende Laschen (23, 24; 25, 26) im Querschnitt annähernd dachförmig zueinander geneigt sind, und der Schlitz (27) im Formteil (15) in die umgebogenen Enden (17; 18) des Formteils (15) maximal um die Größe des Durchmessers (D₁) ihrer zylindrischen Innenräume (20) eintritt, und wobei ferner bei einem eingelegten Bügelstrangende dessen Verdickung (11; 12) in den von zwei dachförmig zueinander verlaufenden Laschen (23, 24; 25, 26) und dem plattenförmigen Abschnitt (16) gebildeten Raum einführbar und dort gegen die benachbarte Umbiegung am zugeordneten Ende des Formteiles (15) als Widerlager abstützbar ist.

2. Seitenhalterung nach Anspruch 1, **dadurch gekennzeichnet, daß** die Verdickungen (11 bzw. 12) der Enden (13 bzw. 14) des Bügelstranges (8) im Querschnitt sechs- oder achteckig ausgebildet sind.

3. Seitenhalterung nach Anspruch 1, **dadurch gekennzeichnet, daß** die Verdickungen (11 bzw. 13) der Enden (13 bzw. des Bügelstranges (8) im Querschnitt rund ausgebildet sind.

4. Seitenhalterung nach Anspruch 1, **dadurch gekennzeichnet, daß** die Gesamtbauhöhe (H) des Verschlusses (10) annähernd dem Durchmesser der Verdickungen (11 bzw. 12) der Enden (13 bzw. 14) des Bügelstranges (8) entspricht.

5. Seitenhalterung nach Anspruch 4, **dadurch gekennzeichnet, daß** die nach unten am weitesten vorstehenden Kanten (32 bzw. 33) der freien Enden der nach unten gebogenen Laschen (23, 24 bzw. 25, 26) parallel zur Fläche der Unterseite (19) des Formteiles (10) ausgebildet sind und mit den Unterseiten (34 bzw. 35) der beiden zur Plattenunterseite (19) hin umgebogenen Enden (17 bzw. 18) des Formteils (10) fluchten.

6. Seitenhalterung nach Anspruch 1, **dadurch gekennzeichnet, daß** die beiden sich gegenüberliegenden Laschen (25 bzw. 26) des einen Endes (18) des Formteiles (10) gegen die Verdickung (12) des ersten eingelegten Endes (14) des Bügelstranges (8) mit Druck an dem verdickten Ende (12) anliegen und dieses unlösbar in dem Verschluß (10) halten.

7. Seitenhalterung nach Anspruch 1, **dadurch gekennzeichnet, daß** die Ränder (30 bzw. 31) des Schlitzes (27) sich nach unten in ihrem Abstand voneinander vergrößernd geneigt ausgebildet und der an ihnen zur Anlage kommenden Außenfläche der Verdickungen (11 bzw. 12) der Enden (13 bzw. 14) des Bügelstranges (8) angepaßt sind.

8. Seitenhalterung einer Gleitschutzkette nach einem der vorstehenden Ansprüche, bei der die Befestigungshaken (6) für das Laufnetz (4) aus einem Draht (37) hergestellt sind, der eine im Querschnitt ovale Ausbildung aufweist und die Befestigungshaken (6) so ausgebildet, daß er mit seinen ovalen Seiten (39 bzw. 39') am Bügelstrang (8) bzw. der Flanke des Reifens (1) anliegt.

9. Seitenhalterung nach Anspruch 8, **dadurch gekennzeichnet, daß** die Dicke des die Befestigungshaken (6) bildenden Drahtes (37) zwischen seinen ovalen Seiten (39 bzw. 39') halb so groß ist wie der Durchmesser des den Bügelstrang bildenden Drahtes oder Seiles.

10. Seitenhalterung nach Anspruch 8, **dadurch gekennzeichnet, daß** die Befestigungshaken (6) als Doppelhaken ausgebildet sind.

## Claims

1. Lateral mounting device (9) for an antiskid chain (2) with a closure (10) for connecting the free ends (13; 14) of a hoop length (8) which can be applied to the side of a vehicle tyre (1) and serves to fasten the running grid (4) of the antiskid chain (2) via fastening hooks (6), wherein the closure comprises a moulding (15) which is provided centrally in the longitudinal direction with a slot (27) which passes completely through the thickness (D_{F}) of the moulding (15) and is of a width (B) through which the hoop length (8) can be inserted, and is also provided in the central region of the length of the closure (10) with a lateral widening (19) which allows an end (13; 14), provided with a thickening (11; 12), of the hoop length (8) to be passed through,
***characterised in***
**that** a thickening (11, 12) is made at each of the two free ends (13; 14) of the hoop length (8), and the moulding (15) comprises a central, substantially plate-shaped portion (16), the two mutually opposite ends of which are each bent over towards the plate underside (19) and each form an open, approximately cylindrical interior space (20), wherein straps (23, 25; 24, 26), which are likewise bent over downward, are provided directly adjacent to each of these bent parts at both longitudinal sides (21; 22) of the moulding (15), each two mutually opposite straps (23, 24; 25, 26) are inclined towards one another with an approximately roof-shaped cross section, and the slot (27) in the moulding (15) enters the bent-over ends (17; 18) of the moulding (15) at the most by the magnitude of the diameter (D₁) of their cylindrical interior spaces (20), and wherein, moreover, when a loop length end is inserted, the thickening (11; 12) thereof can be introduced into the space which is formed by two straps (23, 24; 25, 26), extending towards one another in the shape of a roof, and the plate-shaped portion (16) and can be supported here against the adjacent bent part at the associated end of the moulding (15) as an abutment.

2. Lateral mounting device according to Claim 1, **characterised in that** the thickenings (11 and 12, respectively) of the ends (13 and 14, respectively) of the hoop length (8) are hexagonal or octagonal in cross section.

3. Lateral mounting device according to Claim 1, **characterised in that** the thickenings (11 and 12, respectively) of the ends (13 and 14, respectively) of the hoop length (8) are round in cross section.

4. Lateral mounting device according to Claim 1, **characterised in that** the overall height (H) of the closure (10) corresponds approximately to the diameter of the thickenings (11 and 12, respectively) of the ends (13 and 14, respectively) of the hoop length (8).

5. Lateral mounting device according to Claim 4, **characterised in that** the edges (32 and 33, respectively), which project the furthest downward, of the free ends of the downward bent straps (23, 24 and 25, 26, respectively) are formed parallel to the surface of the underside (19) of the moulding (10) and are aligned with the undersides (34 and 35, respectively) of the two ends (17 and 18, respectively) of the moulding (15) which are bent over towards the plate underside (19).

6. Lateral mounting device according to Claim 1, **characterised in that** the two mutually opposite straps (25 and 26, respectively) of one end (18) of the moulding (10) lie under pressure against the thickening (12) of the first inserted end (14) of the hoop length (8) at the thickened end (12) and retain this permanently in the closure (10).

7. Lateral mounting device according to Claim 1, **characterised in that** the edges (30 and 31, respectively) of the slot (27) are inclined downward with an increasing spacing from one another and are adapted to the outer surface of the thickenings (11 and 12, respectively), which come to lie against them, of the ends (13 and 14, respectively) of the hoop length (8).

8. Lateral mounting device for an antiskid chain according to any one of the preceding Claims, in which the fastening hooks (6) for the running grid (4) are made of a wire (37) which has an oval cross section and which forms the fastening hooks (6) such that it lies with its oval sides (39 and 39', respectively) against the hoop length (8) or the side wall of the tyre (1).

9. Lateral mounting device according to Claim 8, **characterised in that** the thickness of the wire (37) which forms the fastening hooks (6) between its oval sides (39 and 39', respectively) is approximately half as great as the diameter of the wire or rope which forms the hoop length.

10. Lateral mounting device according to Claim 8, **characterised in that** the fastening hooks (6) are formed as double hooks.

## Revendications

1. Fixation latérale (9) d'une chaîne antidérapante (2) avec une fermeture (10) pour relier les extrémités libres (13 ; 14) d'un arceau (8) qui peut être posé latéralement contre un pneu de véhicule (1) et sert à fixer le maillage de roulement (4) de la chaîne antidérapante (2) par l'intermédiaire de crochets de fixation (6), la fermeture présentant une pièce usinée (15) qui est munie dans la direction longitudinale, en son milieu, d'une fente (27) qui traverse entièrement l'épaisseur (D_{F}) de la pièce usinée (15) et présente une largeur (B) par laquelle l'arceau (8) peut être inséré, et qui est munie en outre, dans la zone centrale de la longueur de la fermeture (10), d'un élargissement latéral (19) qui permet la traversée d'une extrémité (13 ; 14) munie d'un épaississement (11 ; 12) de l'arceau (8), **caractérisée en ce qu'**un épaississement (11, 12) est disposé à chacune des deux extrémités libres (13 ; 14) de l'arceau (8) et la pièce usinée (15) présente un segment (16) central, essentiellement en forme de plaque, dont les deux extrémités opposées sont chacune recourbées vers la face inférieure de la plaque (19) et forment chacune un espace intérieur (20) ouvert, approximativement cylindrique, des pattes (23, 25 ; 24, 26) également recourbées vers le bas étant prévues de manière directement adjacente à chacune de ces extrémités recourbées sur les deux grands côtés (21 ; 22) de la pièce usinée (15), deux pattes opposées l'une à l'autre (23, 24 ; 25, 26) étant inclinées l'une vers l'autre approximativement en forme de toit quand on regarde en coupe, et la fente (27) dans la pièce usinée (15) entrant dans les extrémités recourbées (17 ; 18) de la pièce usinée (15) au maximum de la dimension du diamètre (D₁) de leurs espaces intérieurs cylindriques (20) et, en outre, lorsqu'une extrémité d'arceau est posée, l'épaississement (11 ; 12) de celui-ci peut être introduit dans l'espace formé par deux pattes (23, 24 ; 25, 26) orientées l'une vers l'autre en forme de toit (23, 24 ; 25, 26) et par le segment (16) en forme de plaque et peut s'appuyer à cet endroit contre la partie recourbée adjacente à l'extrémité associée de la pièce usinée (15) servant de contre-appui.

2. Fixation latérale selon la revendication 1, **caractérisée en ce que** les épaississements (11 et 12) des extrémités (13 et 14) de l'arceau (8) ont une section transversale hexagonale ou octogonale.

3. Fixation latérale selon la revendication 1, **caractérisée en ce que** les épaississements (11 et 12) des extrémités (13 et 14) de l'arceau (8) ont une section transversale circulaire.

4. Fixation latérale selon la revendication 1, **caractérisée en ce que** la hauteur totale (H) de la fermeture (10) correspond approximativement au diamètre des épaississements (11 et 12) des extrémités (13 et 14) de l'arceau (8).

5. Fixation latérale selon la revendication 4, **caractérisée en ce que** les arêtes (32 et 33), les plus en saillie vers le bas, des extrémités libres des pattes recourbées vers le bas (23, 24, respectivement 25, 26) sont formées parallèlement à la surface de la face inférieure (19) de la pièce usinée (15) et sont alignées avec les faces inférieures (34 et 35) des deux extrémités (17 et 18) de la pièce usinée (15) recourbées vers la face inférieure de la plaque (19).

6. Fixation latérale selon la revendication 1, **caractérisée en ce que** les deux pattes opposées (25 et 26) d'une extrémité (18) de la pièce usinée (15) s'appuient avec pression contre l'épaississement (12) de la première extrémité posée (14) de l'arceau (8) et maintiennent celle-ci de manière inséparable dans la fermeture (10).

7. Fixation latérale selon la revendication 1, **caractérisée en ce que** les bords (30 et 31) de la fente (27) sont inclinés avec un écart entre eux s'agrandissant vers le bas et sont adaptés à la surface extérieure qui vient en contact avec eux des épaississements (11 et 12) des extrémités (13 et 14) de l'arceau (8).

8. Fixation latérale d'une chaîne antidérapante selon l'une des revendications précédentes, dans laquelle les crochets de fixation (6) pour le maillage de roulement (4) sont réalisés dans un fil métallique (37) qui présente une section transversale de forme ovale, et les crochets de fixation (6) sont formés de telle sorte que le fil métallique repose par ses faces ovales (39 et 39') respectivement sur l'arceau (8) et sur le flanc du pneu (1).

9. Fixation latérale selon la revendication 8, **caractérisée en ce que** l'épaisseur du fil métallique (37) formant les crochets de fixation (6) est moitié moins grosse entre ses faces ovales (39 et 39') que le diamètre du fil métallique ou câble formant l'arceau.

10. Fixation latérale selon la revendication 8, **caractérisée en ce que** les crochets de fixation (6) sont formés comme des doubles crochets.
